# EUROPÄISCHE PATENTSCHRIFT

(11) **EP 0 941 763 B1**
(45) Veröffentlichungstag und Bekanntmachung des Hinweises auf die Patenterteilung: **14.05.2003**
(21) Anmeldenummer: 99104520.4
(22) Anmeldetag: 06.03.1999
(51) Int. Cl.: B01J 37/02, B05D 7/22, B28B 11/04, C04B 41/45, C04B 41/87

(54) **Verfahren zum Beschichten der Strömungskanäle eines wabenförmigen Katalysatorkörpers mit einer Dispersionsbeschichtung**
Method for coating the channels of a honeycomb catalyst body with a coating dispersion
Procédé pour revêtir les canaux d'un corps catalytique en forme de nid d'abeilles avec une suspension de revêtement

(30) Priorität: 10.03.1998 DE 19810260
(43) Veröffentlichungstag der Anmeldung: 15.09.1999
(73) Patentinhaber: OMG AG & Co. KG, 63457 Hanau (DE)
(72) Erfinder: Foerster, Martin Dr., 63654 Büdingen (DE); Dittrich, Ewald, 63538 Grosskrotzenburg (DE); Birtigh, Gerhard, 61130 Nidderau (DE); Leibold, Walter, 36396 Steinau-Ulmbach (DE); Mergner, Bernd, 79618 Rheinfelden (DE); Hoffmann, Michael Dr., Rochester, MI (US); Hasselmann, Wolfgang, 6001 Porth Elizabeth (US); Schäfer, Robert, 79639 Grenzach-Wylen (DE)
(74) Vertreter: Stellbrink, Axel

(56) Entgegenhaltungen:
- EP-A- 0 327 880
- EP-A- 0 444 494
- WO-A-97/48500
- US-A- 4 066 801
- US-A- 4 208 454
- US-A- 5 346 722

## Beschreibung

Die vorliegende Erfindung betrifft ein Verfahren zum Beschichten der Strömungskanäle eines wabenförmigen Katalysatorkörpers mit einer Dispersionsbeschichtung.

Katalysatorkörper in Wabenform werden im großen Maßstab für die Herstellung von Autoabgaskatalysatoren verwendet. Sie besitzen eine zylindrische Form und werden von einer Vielzahl von Strömungskanälen für die Abgase der Verbrennungskraftmaschinen durchzogen, die parallel zur Zylinderachse liegen. Die Querschnittsform der Katalysatorkörper hängt von den Einbauerfordernissen am Kraftfahrzeug ab. Weit verbreitet sind Katalysatorkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Katalysatorkörper angeordnet. Je nach Anwendungsfall variiert die Kanalbeziehungsweise Zelldichte der Strömungskanäle zwischen 10 und 120 cm⁻². Wabenkörper mit Zelldichten bis zu 250 cm⁻² und mehr sind in der Entwicklung.

Für die Reinigung der Autoabgase werden überwiegend Katalysatorkörper eingesetzt, die durch Extrusion keramischer Massen gewonnen werden. Alternativ dazu stehen Katalysatorkörper aus gewellten und gewickelten Metallfolien zur Verfügung. Für die Abgasreinigung von Personenkraftwagen werden heute noch überwiegend keramische Katalysatorkörper mit Zelldichten von 62 cm⁻² eingesetzt. Die Querschnittsabmessungen der Strömungskanäle betragen in diesem Fall 1,27 x 1,27 mm². Die Wandstärken solcher Katalysatorkörper liegen zwischen 0,1 und 0,2 mm.

Zur Umsetzung der in Autoabgasen enthaltenen Schadstoffe wie Kohlenmonoxid, Kohlenwasserstoffe und Stickoxide in unschädliche Verbindungen werden zumeist feinstverteilte Platingruppenmetalle eingesetzt, die durch Verbindungen von Unedelmetallen in ihrer katalytischen Wirkung verändert sein können. Diese katalytisch aktiven Komponenten müssen auf den Katalysatorkörpern abgeschieden werden. Allerdings ist es nicht möglich, die geforderte feinste Verteilung der katalytisch aktiven Komponenten durch Abscheidung dieser Komponenten auf den geometrischen Oberflächen der Katalysatorkörper zu gewährleisten. Dies gilt in gleicher Weise für die unporösen metallischen wie auch für die porösen keramischen Katalysatorkörper. Eine ausreichend große Oberfläche für die katalytisch aktiven Komponenten kann nur durch Aufbringen einer Trägerschicht aus feinteiligen, hochoberflächigen Materialien zur Verfügung gestellt werden.

Gegenstand der vorliegenden Erfindung ist ein Verfahren zur Aufbringung einer solchen Trägerschicht auf die Innenflächen der Strömungskanäle von wabenförmigen Katalysatorkörpern. Im Rahmen dieser Erfindung wird die Trägerschicht für die katalytisch aktiven Komponenten als Dispersionsbeschichtung bezeichnet. Die Dispersionsbeschichtung besteht aus den feinteiligen, hochoberflächigen Materialien und wird unter Verwendung einer sogenannten Beschichtungsdispersion hergestellt. Bei der Beschichtungsdispersion handelt es sich um eine Aufschlämmung der feinteiligen Materialien zumeist in Wasser.

Es sind aus dem Stand der Technik verschiedehe Verfahren zur Abscheidung der Dispersionsbeschichtung auf den Katalysatorkörpern unter Verwendung der Beschichtungsdispersion bekannt. Nach dem Beschichtungsvorgang werden die Katalysatorkörper getrocknet und anschließend zur Verfestigung der Dispersionsbeschichtung kalziniert. Anschließend werden die katalytisch aktiven Komponenten in die Dispersionsbeschichtung durch Imprägnieren mit zumeist wäßrigen Lösungen von Vorläuferverbindungen der katalytisch aktiven Komponenten eingebracht. Alternativ hierzu können die katalytisch aktiven Komponenten auch schon der Beschichtungsdispersion selbst zugefügt werden. Ein nachträgliches Imprägnieren der fertiggestellten Dispersionsbeschichtung mit den katalytisch aktiven Komponenten entfällt in diesem Fall.

Für eine effektive Reinigung der Abgase der Verbrennungskraftmaschinen muß das Volumen der Katalysatorkörper eine ausreichende Größe aufweisen. Gewöhnlich wird ein Verhältnis des Hubraumes der Verbrennungskraftmaschine zum Volumen des Katalysatorkörpers von 1 : 2 bis 2 : 1 gewählt. So weisen typische Katalysatorkörper für Personenkraftwagen ein Volumen von etwa 1 Liter auf mit einem Durchmesser von 100 mm (4 Zoll) und einer Länge von 152 mm (6 Zoll). Das Trockengewicht der Dispersionsbeschichtung auf solchen Katalysatorkörpern liegt zwischen 50 und 200 g/l Volumen der Katalysatorkörper. Dies entspricht bei einer Zelldichte von 62 cm⁻² einer rechnerischen Schichtdicke der Dispersionsbeschichtung von 20 bis 80 µm. Wegen der Kapillarkräfte ist jedoch die Dispersionsbeschichtung in der Regel sehr ungleichmäßig über den Querschnitt der Strömungskanäle verteilt mit starken Ansammlungen von Beschichtungsmaterial in den Ecken der Kanäle und relativ dünnen Schichtdicken auf den Mitten der Kanalwände.

Verfahren zum Aufbringen der Dispersionsbeschichtung auf die Katalysatorkörper müssen eine hohe Produktivität bei geringen Ausschußquoten aufweisen. Sie müssen es daher ermöglichen, die gesamte Beschichtungsmenge in einem einzigen Arbeitsgang auf die Katalysatorkörper aufzubringen. Mehrfachbeschichtungen zum Erreichen der erforderlichen Schichtdicke sind zu vermeiden. Darüber hinaus müssen die Beschichtungsverfahren sicherstellen, daß das Beschichtungsmaterial die Strömungskanäle nicht verstopft. Weiterhin wird von solchen Beschichtungsverfahren allgemein gefordert, daß sie das Beschichten des äußeren Mantels der Katalysatorkörper vermeiden. Damit sollen teueres Beschichtungsmaterial und eventuell teuere katalytisch aktive Komponenten eingespart werden.

Die GB 1 515 733 beschreibt ein Beschichtungsverfahren für keramische Katalysatorkörper. Die porösen Katalysatorkörper werden stehend, d. h. mit senkrecht ausgerichteten Strömungskanälen, in eine druckfeste Beschichtungskammer eingesetzt und durch Anlegen eines Unterdruckes von 0,84 bar (25 Zoll Quecksilbersäule) entgast. Anschließend wird die Beschichtungsdispersion über die obere Stirnfläche des Katalysatorkörpers in die Beschichtungskammer eingefüllt und durch Anlegen eines Überdruckes in die Poren des Katalysatorkörpers eingepresst. Nach Zurücknahme des Überdruckes und Öffnen eines Ablaßventiles im Boden der Beschichtungskammer fließt überschüssige Beschichtungsdispersion aus den Strömungskanälen des Katalysatorkörpers. Abschließend werden eventuell durch Beschichtungsdispersion blockierte Strömungskanäle mit Preßluft von oben nach unten freigeblasen. Die Taktzeit dieses Beschichtungsverfahrens beträgt weniger als 1 1/2 bis 2 Minuten.

Die US 4,208,454 beschreibt ebenfalls ein Verfahren zur Beschichtung von porösen keramischen Katalysatorkörpern. Die zu beschichtenden Katalysatorkörper werden mit ihrer unteren Stirnfläche auf die Öffnung eines Abscheidegefäßes gestellt, in welchem der Druck mittels eines großvolumigen Gebläses um 5 bis 16 Zoll Wassersäule gegenüber dem Atmosphärendruck vermindert ist. Dieser Unterdruck wird während der gesamten Beschichtungsdauer konstant gehalten. Ein vorgegebenes Volumen der Beschichtungsdispersion wird über die obere Stirnfläche des Katalysatorkörpers verteilt und gleichmäßig durch die Strömungskanäle hindurch in das Abscheidegefäß hineingezogen. Der Absaugvorgang wird für wenigstens etwa 30 s aufrechterhalten. Nach den ersten 5 s ist die gesamte Beschichtungsmenge durch den Katalysatorkörper hindurchgezogen. Während der restlichen Zeit sorgt die durch die Strömungskanäle hindurchströmende Luft dafür, daß eventuell durch Beschichtungsdispersion blockierte Strömungskanäle geöffnet werden. Die auf dem Katalysatorkörper verbleibende Beschichtungsmenge kann durch die Dauer der gesamte Absaugzeit und durch die Höhe des Unterdruckes beeinflußt werden. Die axiale Gleichmäßigkeit der Beschichtung auf dem Katalysatorkörper kann dadurch verbessert werden, daß nach etwa der Hälfte der Absaugzeit der Katalysatorkörper umgedreht und in entgegengesetzter Richtung abgesaugt wird. Mit diesem Verfahren lassen sich Beschichtungsdispersionen mit 30 bis 45 % Feststoffgehalt sowie einer Viskosität zwischen 60 und 3000 cps verarbeiten. Der bevorzugte Feststoffgehalt liegt bei 37 Gew.-% und die bevorzugte Viskosität bei 400 cps. Die Reproduzierbarkeit der Beschichtungsmenge wird bei diesem Verfahren mit ± 5% angegeben.

Die EP 0 157 651 beschreibt ebenfalls ein Verfahren zur Beschichtung keramischer Katalysatorkörper mit einer vorgegebenen Menge einer Beschichtungsdispersion. Hierzu wird die vorgewogene Menge der Beschichtungsdispersion in ein offenes, breites Gefäß eingefüllt und der Katalysatorkörper mit seiner unteren Stirnfläche in die Dispersion eingetaucht. Anschließend wird die Dispersion durch Anlegen eines leichten Unterdruckes an die obere Stirnfläche in die Strömungskanäle des Katalysatorkörpers hineingesaugt. Zur Verbesserung der axialen Gleichmäßigkeit der Beschichtung wird auch hier empfohlen, den Beschichtungsprozeß in zwei Schritten ablaufen zu lassen.

Im ersten Schritt werden nur etwa 50 bis 85 % der gesamten Beschichtungsmenge in das Gefäß eingefüllt und in den Katalysatorkörper eingesaugt. Danach wird der Katalysatorkörper gedreht und die restliche Beschichtungsmenge in entgegengesetzter Richtung in den Katalysatorkörper gesaugt. Dieses Beschichtungsverfahren benötigt keinen separaten Schritt für die Öffnung eventuell verschlossener Strömungskanäle. Die Taktzeit dieses Verfahrens beträgt etwas weniger als 1 Minute. Mit diesem Verfahren können Beschichtungsdispersionen verarbeitet werden, die einen Feststoffgehalt zwischen 35 und 52 % aufweisen sowie Viskositäten zwischen 15 und 300 cps besitzen.

Die US 5,182,140 beschreibt ein Verfahren zur Beschichtung von keramischen und metallischen Katalysatorkörpern. Hierbei wird die Beschichtungsdispersion von unten in die senkrecht aufgestellten Katalysatorkörper eingepumpt, bis die Dispersion vollständig eine Höhe oberhalb der oberen Stirnfläche des Katalysatorkörpers erreicht. Anschließend wird die Beschichtungsdispersion durch Anwendung von Preßluft auf die obere Stirnfläche des Katalysatorkörpers aus dem Körper entfernt. Dabei werden gleichzeitig eventuell noch verschlossene Strömungskanäle freigeblasen. Gemäß Beispiel 1 dieser Patentschrift wird ein Füllstand der Beschichtungsdispersion oberhalb der oberen Stirnfläche des Katalysatorkörpers von 2 cm eingestellt. Die Preßluft zum Austreiben der Beschichtungsdispersion aus den Strömungskanälen wird in zwei Druckstufen nacheinander zugeführt. Während der ersten 2 Sekunden nach dem Befüllen des Katalysatorkörpers wird die Beschichtungsdispersion mit einer Preßluft von 3,7 bar beaufschlagt. Dieser hohe Druck reicht aus, um während der zur Verfügung stehenden 2 s die Beschichtungsdispersion vollständig aus den Strömungskanälen auszutreiben. Danach wird der Preßluftdruck auf 0,37 bar vermindert und der Katalysatorkörper zweimal mit diesem Druck jeweils 0,5 s lang beaufschlagt. Mit diesem Verfahren können Beschichtungsdispersionen verarbeitet werden, die eine spezifische Dichte zwischen 1 und 2 g/ml aufweisen und eine Viskosität zwischen 100 und 500 cps besitzen.

Die DE 40 40 150 C2 beschreibt ebenfalls ein Verfahren zur gleichmäßigen Beschichtung eines Wabenkörpers aus Keramik oder Metall. Hierzu wird der Wabenkörper in eine Tauchkammer eingebracht und von unten mit der Beschichtungsdispersion gefüllt. Danach wird der Wabenkörper wieder durch Ausblasen oder Absaugen entleert. Der Wabenkörper wird dann aus der Tauchkammer entnommen und in einer separaten Anlage zur Vermeidung von blockierten Strömungskanälen durch Absaugen oder Ausblasen von überschüssiger Dispersion befreit. Mit diesem Verfahren können Beschichtungsdispersionen mit Feststoffgehalten zwischen 48 und 64 Gew.-% sowie Viskositäten zwischen 50 und mehr als 100 cps verarbeitet werden.

Abgaskatalysatoren für Verbrennungskraftmaschinen unterliegen ständig steigenden gesetzlichen Anforderungen bezüglich ihrer Schadstoffumsetzung und Lebensdauer. Eine Vergrößerung der Lebensdauer der Katalysatoren kann durch eine verbesserte Katalysatorrezeptur als auch durch eine Vergrößerung des Anteils der katalytisch aktiven Komponenten auf dem Katalysator erreicht werden. Ein höherer Anteil von katalytisch aktiven Komponenten erfordert jedoch auch eine höhere Beladung des Katalysatorkörpers mit Beschichtungsdispersion. Verbesserte Schadstoffumsetzungen lassen sich auch durch Katalysatoren mit höheren Zelldichten erreichen. In beiden Fällen - sowohl bei der Erhöhung der Beschichtungskonzentration als auch bei der Erhöhung der Zelldichte - erhöht sich bei dem Beschichtungsvorgang die Gefahr von Verstopfungen der Strömungskanäle mit Beschichtungsdispersion.

Es ist daher Aufgabe der vorliegenden Erfindung, ein neues Beschichtungsverfahren für keramische und metallische Katalysatorkörper in Wabenform zur Verfügung zu stellen, welches sich durch folgende Eigenschaften auszeichnet:
- reproduzierbare Beladung der Katalysatorkörper eines Fertigungsloses mit immer derselben Menge an Beschichtungsdispersion
- Beschichten der Katalysatorkörper mit mehr als 200 g Trockenmasse pro Liter Katalysatorvolumen
- Beschichten von Katalysatorkörpern mit Zelldichten bis zu 250 cm⁻²
- möglichst gleichmäßige radiale und axiale Schichtdicke der Beschichtung
- sicheres Vermeiden von verstopften Strömungskanälen
- möglichst weitgehende Unabhängigkeit des Verfahrens von den rheologischen Eigenschaften der Beschichtungsdispersion

Diese Aufgabe wird gelöst durch ein Verfahren zum Beschichten der Strömungskanäle eines zylindrisch geformten, wabenförmigen Katalysatorkörpers mit einer Dispersionsbeschichtung durch Füllen der senkrecht ausgerichteten Strömungskanäle mit einer Füllmenge der Beschichtungsdispersion durch die untere Stirnfläche des Katalysatorkörpers und nachfolgendes Entleeren und Freisaugen der Strömungskanäle nach unten sowie Trocknen und Kalzinieren des Katalysatorkörpers. Das Verfahren ist durch folgende Schritte gekennzeichnet:
a) Füllen der Strömungskanäle mit einer Füllmenge, die um bis zu 10 % größer ist als das Leervolumen der Strömungskanäle, so daß die Beschichtungsdispersion nach Abschluß des Füllvorganges die obere Stirnfläche des Katalysatorkörpers übersteigt,
b) Entfernen der überstehenden Beschichtungsdispersion vor dem Entleeren der Strömungskanäle und
c) Entleeren und Freisaugen der Strömungskanäle durch einen Saugimpuls, der durch Verbinden eines Unterdruckbehälters mit der unteren Stirnfläche des Katalysatorkörpers erzeugt wird,
wobei die Zeit zwischen dem Beginn des Füllvorganges und dem Ende des Entleerens und Freisaugens nicht mehr als 5 Sekunden beträgt.

Füllen, Entleeren und Freisaugen der Strömungskanäle des Katalysatorkörpers werden erfindungsgemäß sehr schnell vorgenommen. Die Strömungsgeschwindigkeiten der Beschichtungsdispersion in den Strömungskanälen beträgt dabei zwischen 0,1 und 1 m/s. Das Füllen der Beschichtungsdispersion von unten erfolgt solange, bis die Beschichtungsdispersion aus der oberen Stirnfläche des Katalysatorkörpers heraustritt und die obere Stirnfläche überschwemmt. Damit wird sichergestellt, daß alle Strömungskanäle des Katalysatorkörpers mit Beschichtungsdispersion gefüllt sind. Dies ist dann der Fall, wenn das geförderte Volumen der Beschichtungsdispersion etwa 10 % größer ist als das Leervolumen aller Strömungskanäle des Wabenkörpers zusammen. Bevorzugt wird dieser Überschuß auf 1 bis 5 % des Leervolumens der Strömungskanäle eingestellt. Dieser Überschuß sollte einerseits so gering wie möglich gehalten werden, aber andererseits ausreichend sein, um das vollständige Füllen aller Strömungskanäle zu gewährleisten. Ein zu großer Überschuß der Beschichtungsdispersion führt zu einem Spüleffekt in den Strömungskanälen und somit zu einer Verminderung der auf dem Katalysatorkörper verbleibenden Beschichtungsmenge.

Das Füllen der Strömungskanäle kann auf verschiedene Arten erfolgen. Es besteht die Möglichkeit, die Beschichtungsdispersion von unten in den Katalysatorkörper einzupumpen, oder durch Anlegen eines Unterdrucks an der oberen Stirnfläche des Katalysatorkörpers in diesen hineinzusaugen. Bevorzugt wird die Beschichtungsdispersion eingepumpt.

Der Vermeidung dieses Spüleffektes dient auch die zweite Maßnahme des erfindungsgemäßen Verfahrens, nach der die überstehende Beschichtungsdispersion vor dem Entleeren und Freisaugen der Strömungskanäle entfernt wird. Dies kann zum Beispiel durch eine seitlich oder oberhalb an der oberen Stirnfläche der Katalysatorkörper angebrachten Absaugung geschehen. Ein Unterlassen dieses Entfernen der überstehenden Beschichtungdispersion vor dem Entleeren hätte zur Folge, daß diese überstehende Beschichtungsdispersion ebenfalls durch die Strömungskanäle gesaugt werden muß. Der damit verbundene Spüleffekt würde die auf dem Katalysatorkörper abgeschiedene Beschichtungsmenge vermindern.

Untersuchungen haben gezeigt, daß durch das vorherige Entfernen der überstehenden Beschichtungsdispersion die auf dem Katalysatorkörper abscheidbare Beschichtungsmenge um über 20 g Trockenmasse pro Liter Katalysatorvolumen erhöht werden kann.

Das schnelle Entleeren und sichere Vermeiden von blockierten Strömungskanälen wird durch Anlegen eines Saugimpulses an die untere Stirnfläche des Katalysatorkörpers erreicht. Die kurze Zeit von weniger als 1 Sekunde zwischen Füllen und Entleeren führt dazu, daß sich die Fließgrenze bei thixotropen bis strukturviskosen Dispersionen nicht ausbilden kann. Der Saugimpuls wird mittels eines Unterdruckbehälters erzeugt, welcher mit der unteren Stirnfläche des Katalysatorkörpers verbunden wird. Bevorzugt wird der Unterdruckbehälter auf einen Unterdruck von mindestens 150 mbar evakuiert. Durch Herstellen der Verbindung zwischen der unteren Stirnfläche des Katalysatorkörpers und dem Unterdruckbehälter wird die Beschichtungsdispersion aus den Strömungskanälen innerhalb einer kurzen Zeitspanne von 1 bis 1,5 s entfernt. Die nachströmende Luft öffnet eventuell noch blockierte Strömungskanäle, was im Rahmen dieser Erfindung als Freisaugen bezeichnet wird, und führt zu einer Verminderung des Unterdruckes im Unterdruckbehälter und somit zu einer kontinuierlichen Abnahme der Strömungsgeschwindigkeit der Luft in den Strömungskanälen.

Die Entleercharakteristik kann durch 4 Parameter beeinflußt werden. Es handelt sich dabei um den anfänglichen Unterdruck im Unterdruckbehälter, um die Förderleistung des Sauggebläses, um das Volumen des Unterdruckbehälters relativ zu dem Volumen des Katalysatorkörpers und um den freien Strömungsquerschnitt zwischen der unteren Stirnfläche des Katalysatorkörpers und dem Unterdruckbehälter.

Eine möglichst schnelle Entfernung der Beschichtungsdispersion aus den Strömungskanälen erreicht man durch einen Unterdruck im Unterdruckbehälter von mindestens 150 mbar. Danach sollte der Unterdruck als treibende Kraft für die Entfernung der Beschichtungsdispersion aus den Strömungskanälen und für die anschließende Luftströmung kontinuierlich abnehmen, um zu verhindern, daß zuviel Beschichtungsmaterial aus den Strömungskanälen entfernt wird. Dies kann durch geeignete Dimensionierung des Volumens des Unterdruckbehälters und der Gebläseleistung geschehen sowie durch Einstellen des freien Strömungsquerschnittes zwischen dem Katalysatorkörper und dem Behälter mittels einer Drosselklappe zwischen 0 und einem Maximalwert, der durch den gewählten Leitungsquerschnitt zwischen Katalysatorkörper und Unterdruckbehälter gegeben ist.

Während des Freisaugens liegt die Strömungsgeschwindigkeit der Luft in den Strömungskanälen oberhalb von 5 m/s. Der maximale Wert der Strömungsgeschwindigkeit zu Beginn der Absaugung liegt oberhalb von 40 m/s. Diese Strömungsgeschwindigkeiten können durch entsprechende Regelung der Drosselklappe und der Gebläseleistung eingestellt werden.

Keramische Katalysatorkörper weisen im trocknen Zustand ein erhebliches Saugvermögen auf für den Flüssigkeitsanteil der Beschichtungsdispersion auf. Bei der Beschichtung von hochzelligen Katalysatorkörpern mit Zelldichten von 120 cm⁻² und darüber führt dies schon während des Füllens des Katalysatorkörpers zu einer Verfestigung der Beschichtungsdispersion und damit zu einer Verstopfung der Strömungskanäle. Um auch diese Katalysatorkörper nach dem beschriebenen Verfahren beschichten zu können, ist vorgesehen, die Katalysatorkörper vor dem Beschichten anzufeuchten. Bei dieser Anfeuchtung kann es sich auch um eine Vorimprägnierung mit Säuren, Basen oder Salzlösungen handeln. Die Vorimprägnierung erleichtert die Ausbildung der Beschichtung auf den Kanalwänden nach der Sol-Gel-Methode. Durch den Kontakt der Beschichtungsdispersion mit den vorimprägnierten Kanalwänden wird der pH-Wert der Dispersion verschoben. Hierdurch wird die Dispersion in ein Gel überführt.

Die Konzentration der Beschichtungsdispersion auf dem Katalysatorkörper kann in einer weiteren vorteilhaften Ausführungsform des erfindungsgemäßen Verfahrens dadurch erhöht werden, daß der Katalysatorkörper nach der Entnahme aus der Beschichtungsvorrichtung von unten entgegen der Schwerkraft mit vorgewärmter Luft mit Temperaturen zwischen 20 und 150°C und Geschwindigkeiten von mehr als 4, bevorzugt 7 - 10 m/s, für die Dauer von 5 bis 20 s durchströmt wird. Durch diese Art der Vortrocknung vor dem eigentlichen Kalzinieren der Katalysatorkörper kann ein häufig bei sehr hohen Beladungen zu beobachtendes Zulaufen der Strömungskanäle bzw. eine Verengung der Kanäle am unteren Ende der Katalysatorkörper vermieden werden. Diese zusätzliche Maßnahme ermöglicht es also, den Katalysatorkörper mit einer höheren Beschichtungsmenge als üblich zu beladen, ohne daß die Gefahr besteht, daß die Strömungskanäle während des Trocknungs- und Kalzinierungsvorganges zulaufen, oder sich verengen.

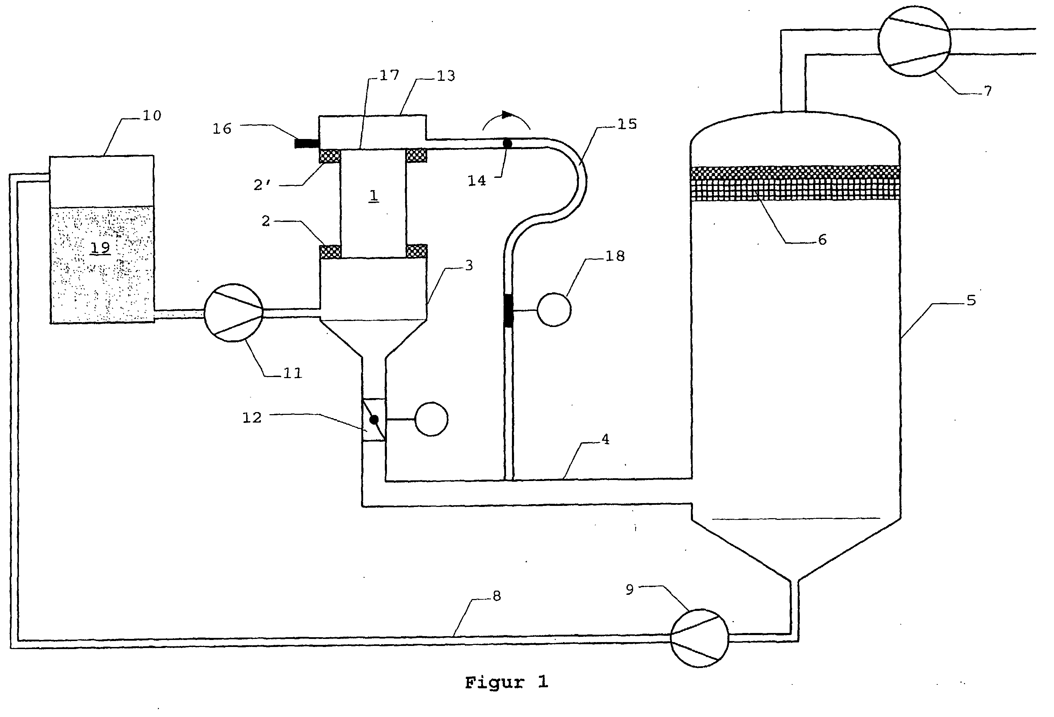

Die Erfindung wird nun anhand einiger Beispiele näher erläutert. Es zeigt
- Figur 1:: Schema einerfür das erfindungsgemäße Verfahren geeigneten Beschichtungsapparatur.

Gemäß Figur 1 besteht die Beschichtungsapparatur aus:
- dem zu beschichtenden Katalysatorkörper 1,
- einer Aufnahme für den Katalysatorkörper mit einer unteren Gummimanschette 2 und einer oberen Gummimanschette 2',
- einem Absaugtrichter 3 unterhalb der Aufnahme für den Katalysatorkörper,
- einer Absaugleitung 4, die den Absaugtrichter 3 über die Drosselklappe 12 mit dem Unterdruckbehälter 5 verbindet,
- einem Demister 6 im Unterdruckbehälter sowie einem Absauggebläse 7, welches im Unterdruckbehälter einen Unterdruck von etwa 150 bis 500 mbar aufrecht erhält,
- einer Rückführungsleitung 8 sowie einer Pumpe 9 für die Rückführung der überschüssigen Beschichtungsdispersion,
- dem Vorratsbehälter 10 für die Beschichtungsdispersion 19,
- einer Pumpe 11 für das Einpumpen der Beschichtungsdispersion in den Katalysatorkörper,
- einer Abdeckhaube 13 mit Abblasventil 16 und Absaugleitung 15, die in die Absaugleitung 4 mündet, wobei die Abdeckhaube um die Drehachse 14 nach oben geschwenkt werden kann und
- einem Absaugventil 18 in Absaugleitung 15.

Mit dieser Beschichtungsapparatur gestaltet sich die Beschichtung eines Wabenkörpers wie folgt:
1. Schließen der Drosselklappe 12 und des Ventils 18,
2. Einspannen des Katalysatorkörpers 1 in die Aufnahme 2,
3. Aufsetzen der Abdeckhaube 13 auf die obere Gummimanschette des Katalysatorkörpers, Öffnen des Abblasventils 16,
4. Einpumpen der Beschichtungsdispersion mit Hilfe der Pumpe 11 von unten in den Katalysatorkörper mit einer Füllmenge, die um bis zu 10 % größer ist als das Leervolumen der Strömungskanäle (Überfüllung),
5. Öffnen des Absaugventils 18 und Absaugen der überstehenden Beschichtungsdispersion von der oberen Stirnfläche in den Unterdruckbehälter 5,
6. Schließen des Absaugventils 18, Öffnen des Deckels und anschließend Öffnen der Regelklappe 12 auf einen zuvor bestimmten Wert zur Absaugung der überschüssigen Beschichtungsdispersion im Katalysatorkörper (Freisaugen),
7. Nachsaugen von Luft, um eventuell noch verstopfte Strömungskanäle zu öffnen,
8. Entnehmen des Katalysatorkörpers und gegebenenfalls Durchströmen des Katalysatorkörpers mit erwärmter Luft entgegen der Entleerungsrichtung in einer separaten Apparatur.

Im Unterdruckbehälter wird die abgesaugte Beschichtungsdispersion gesammelt und mittels der Pumpe 9 über die Rückführungsleitung 8 in den Vorratsbehälter 10 zurückgeführt.

Mit der beschriebenen Apparatur wurden die folgenden Testreihen durchgeführt:

### Vergleichsbeispiel 1:

Es wurde eine Serie von 100 keramischen Wabenkörpern mit einer Katalysatorbeschichtung versehen. Alle Dispersionen waren stark thixotrop (siehe Definition von Thixotropie in DIN 13342).

| **Daten der Wabenkörper** | | |
|---|---|---|
| Zelldichte | 62 | cm⁻² |
| Wandstärke | 0.16 | mm |
| Durchmesser | 101.6 | mm |
| Länge | 152.4 | mm |
| Volumen | 1.24 | 1 |

| **Daten der Beschichtungsdispersion** | | |
|---|---|---|
| Al₂O₃-Mischoxiddispersion | | |
| Feststoffgehalt | 60 | Gew.-% |
| Viskosität | 400 | mPa·s |

| **Verfahrensparameter** | | |
|---|---|---|
| Füllzeit | 1.5 | s |
| Überfüllung | 8 | % |
| Absaugzeit für Überfüllung | keine Absaugung | |
| V_{Unterdruckbehälter}/V_{Wabenkörper}/ | 500 | |
| Unterdruck p₁ | 350 | mbar |
| Drosselklappenstellung | 27 | % |
| Entleerungszeit | 0.5 | s |
| Nachsaugzeit | 1 | s |

Mit diesen Beschichtungsparametern wurde eine Beschichtungskonzentration von 210 g Trockenmasse pro Liter Katalysatorkörper mit einer Standardabweichung von σ=8g erhalten.

### Beispiel 1

Die Beschichtungsserie von Vergleichsbeispiel 1 wurde wiederholt. Die überfüllte Menge an Beschichtungsdispersion wurde jedoch diesmal vor dem Entleeren innerhalb von 1 s abgesaugt.

Die auf diese Weise erzielte Beschichtungskonzentration betrug 235 g Trockenmasse pro Liter Katalysatorkörper mit einer Standardabweichung von σ=5 g.

### Beispiel 2

Die Beschichtungsserie von Beispiel 1 wurde mit einer Klappenstellung der Drosselklappe von 25 % wiederholt (25 %ige Öffnung des maximalen Strömungsquerschnittes). Die Kanäle waren nach dem Freisaugen noch blockiert. Danach wurde durch die Strömungskanäle des Katalysatorkörper von unten nach oben ein auf 80°C erwärmter Luftstrom mit einer Geschwindigkeit von 5 m/s für die Dauer von 10 Sekunden geführt. Die Kanäle öffneten sich und blieben auch nach 10 Minuten noch geöffnet.

Die damit erzielte Beschichtungskonzentration betrug 263 g Trockenmasse pro Liter Katalysatorkörper mit einer Standardabweichung von σ=6 g.

### Beispiel 3

Es wurde eine weitere Serie von 100 Wabenkörpern gemäß Beispiel 1 beschichtet. Die Wabenkörper wurden vor dem Beschichten durch Tauchen in ammoniakalisches Wasser (pH = 8,5) angefeuchtet. Alle anderen Parameter waren identisch mit denen von Beispiel 1.

Die erzielte Trockenaufnahme der Wabenkörper betrug 252 g/l mit einer Standardabweichung σ = 3 g.

### Beispiel 4

Es wurde eine Serie von 100 hochzelligen, keramischen Wabenkörpern mit einer Katalysatorbeschichtung versehen.

| **Daten der Wabenkörper** | | |
|---|---|---|
| Zelldichte | 120 | cm⁻² |
| Wandstärke | 0.1 | mm |
| Durchmesser | 152.2 | mm |
| Länge | 50.8 | mm |
| Volumen | 0.93 | 1 |

| **Daten der Beschichtungsdispersion** | | |
|---|---|---|
| Al₂O₃-Mischoxiddispersion | | |
| Feststoffgehalt | 50 | Gew.-% |
| Viskosität | 300 | mPa·s |

| **Verfahrensparameter** | | |
|---|---|---|
| Füllzeit | 1.0 | s |
| Überfüllung | 5 | % |
| Absaugzeit für Überfüllung | 1 | s |
| V_{Unterdruckbehälter}/V_{Wabenkörper} | 500 | |
| Unterdruck p₁ | 400 | mbar |
| Drosselklappenstellung | 30 | % |
| Entleerungszeit | 0.5 | s |
| Nachsaugzeit | 3 | s |

Mit diesen Beschichtungsparametern wurde eine Beschichtungskonzentration von 315 g Trockenmasse pro Liter Katalysatorkörper mit einer Standardabweichung von σ=10 g erhalten.

Wie die vorstehenden Beispiele zeigen, können durch die erfindungsgemäßen Maßnahmen, nämlich Entfernen der überstehenden Beschichtungsdispersion vor dem Entleeren und Durchströmen der Wabenkörper nach dem Entleeren mit erwärmter Luft entgegen der Entleerungsrichtung, die erzielbaren Beschichtungskonzentrationen erheblich erhöht werden. So beträgt die Steigerung der Beschichtungskonzentration in Beispiel 1 gegenüber Vergleichsbeispiel 1 durch Entfernen der überstehenden Beschichtungsdispersion +12 %. Eine weitere Steigerung der Beschichtungskonzentration von +12 % (+25 % gegenüber Vergleichsbeispiel 1) wurde durch Verringern des freien Strömungsquerschnittes beim Freisaugen und anschließendes Durchströmen der Wabenkörper mit erwärmter Luft entgegen der Entleerungsrichtung erzielt.

Durch Tränken der Wabenkörper mit ammoniakhaltigem Wasser konnte die Reproduzierbarkeit der Beschichtung wesentlich verbessert werden.

Die vorliegenden Ergebnisse wurden mit der Apparatur und Figur 1 erhalten. Das Verfahren kann jedoch auch mit anders aufgebauten Apparaturen durchgeführt werden, sofern die beschriebenen Verfahrensschritte befolgt werden.

## Patentansprüche

1. Verfahren zum Beschichten der Strömungskanäle eines zylindrisch geformten, wabenförmigen Katalysatorkörpers (1) mit einer Dispersionsbeschichtung durch Füllen der senkrecht ausgerichteten Strömungskanäle mit einer Füllmenge der Beschichtungsdispersion (19) durch die untere Stirnfläche des Katalysatorkörpers und nachfolgendes Entleeren und Freisaugen der Strömungskanäle nach unten, sowie Trocknen und Kalzinieren des Katalysatorkörpers, **gekennzeichnet durch** die folgenden Schritte:
a) Füllen der Strömungskanäle mit einer Füllmenge, die um bis zu 10 % größer ist als das Leervolumen der Strömungskanäle, so daß die Beschichtungsdispersion nach Abschluß des Füllvorganges die obere Stirnfläche des Katalysators übersteigt,
b) Entfernen der überstehenden Beschichtungsdispersion vor dem Entleeren der Strömungskanäle und
c) Entleeren und Freisaugen der Strömungskanäle **durch** einen Saugimpuls, der **durch** Verbinden eines Unterdruckbehälters (5) mit der unteren Stirnfläche des Katalysators erzeugt wird,
wobei die Zeit zwischen dem Beginn des Füllvorganges und dem Ende der Entleerung nicht mehr als 5 Sekunden beträgt.

2. Verfahren nach Anspruch 1,
**dadurch gekennzeichnet,**
**daß** der Unterdruckbehälter einen anfänglichen Unterdruck von mindestens 150 mbar aufweist und ein Volumen besitzt, welches das 100 bis 1000-fache des Volumens des Katalysatorkörpers beträgt.

3. Verfahren nach Anspruch 2,
**dadurch gekennzeichnet,**
**daß** während des Freisaugens eine minimale Strömungsgeschwindigkeit der Luft von wengistens 5 m/s in den Strömungskanälen aufrecht erhalten wird.

4. Verfahren nach Anspruch 3,
**dadurch gekennzeichnet,**
**daß** der freie Strömungsquerschnitt zum Unterdruckbehälter zwischen 0 und einem Maximalwert einstellbar ist.

5. Verfahren nach Anspruch 4,
**dadurch gekennzeichnet,**
**daß** die Zeit zwischen Füllen und Absaugen so kurz ist, daß sich die Fließgrenze bei thixotropen oder strukturviskosen Dispersionen nicht ausbilden kann.

6. Verfahren nach Anspruch 5,
**dadurch gekennzeichnet,**
**daß** der Katalysatorkörper vor dem Beschichten angefeuchtet wird.

7. Verfahren nach Anspruch 5,
**dadurch gekennzeichnet,**
**daß** der Katalysatorkörper vor dem Beschichten mit Säuren, Basen oder Salzlösungen vorimprägniert wird.

8. Verfahren nach den Ansprüchen 1 bis 7,
**dadurch gekennzeichnet,**
**daß** nach dem Entleeren der Strömungskanäle und vor dem Kalzinieren des Katalysatorkörpers ein erwärmter, trockener Luftstrom mit einer Temperatur zwischen 50 und 80°C entgegen der Entleerungsrichtung mit einer Geschwindigkeit von mehr als 2 bis 10 m/s für die Dauer von 2 bis 60 s durch die Strömungskanäle geführt wird.

## Claims

1. A process for coating the flow channels in a cylindrical honeycomb catalyst structure (1) with a dispersion coating by filling the vertically aligned flow channels with a filling amount of the coating dispersion (19) via the lower end face of the catalyst structure and then emptying the flow channels and clearing them under suction in a downwards direction, and also drying and calcining the catalyst structure,
**characterised by** the following steps:
a) filling the flow channels with a filling amount which is up to 10 % greater than the empty volume of the flow channels so that the coating dispersion rises above the upper end face of the catalyst after completion of the filling process,
b) removing the coating dispersion protruding above the channels before emptying the channels and
c) emptying the flow channels and clearing them under suction by means of a suction pulse which is produced by linking a container under reduced pressure (5) with the lower end face of the catalyst,
wherein the time between the start of the filling process and the end of the emptying process is not more than 5 seconds.

2. A process according to claim 1,
**characterised in that**
the container under reduced pressure has an initial reduced pressure of at least 150 mbar and has a volume which is 100 to 1000 times the volume of the catalyst structure.

3. A process according to claim 2,
**characterised in that**
a minimum rate of flow of air of at least 5 m/s is maintained in the flow channels while they are cleared under suction.

4. A process according to claim 3,
**characterised in that**
the free cross-section of flow to the container under reduced pressure can be adjusted between 0 and a maximum value.

5. A process according to claim 4,
**characterised in that**
the time between filling and suction is so short that the yield value cannot be developed in thixotropic or structurally viscous dispersions.

6. A process according to claim 5,
**characterised in that**
the catalyst structure is moistened prior to coating.

7. A process according to claim 5,
**characterised in that**
the catalyst structure is preimpregnated with acids, bases or salt solutions prior to coating.

8. A process according to claims 1 to 7,
**characterised in that**,
after emptying the flow channels and before calcining the catalyst structure, a heated dry stream of air with a temperature between 50 and 80°C is passed through the flow channels for a period of 2 to 60 s at a speed of more than 2 to 10 m/s in the direction opposite to the direction of emptying.

## Revendications

1. Procédé pour revêtir les canaux d'un corps catalytique (1) en nid d'abeilles, cylindrique, avec une dispersion de revêtement, par remplissage des canaux d'écoulement, orientés verticalement, d'une quantité de remplissage de cette dispersion (19) introduite par la face frontale inférieure du corps du catalyseur, ces canaux étant ensuite vidés et laissés en aspiration libre vers le bas et le corps porteur étant séché et calciné,
**caractérisé par** les étapes suivantes :
a) on remplit les canaux d'écoulement d'une quantité de remplissage présentant un volume supérieur jusqu'à 10 % au volume à vide des canaux d'écoulement, de sorte que la dispersion formant le revêtement, à la fin du processus de remplissage, dépasse la surface de catalyseur,
b) on élimine la partie de la dispersion située au dessus de la surface, avant de vider les canaux d'écoulement,
c) on vidange et on laisse en aspiration libre les canaux d'écoulement en créant une impulsion d'aspiration obtenue en reliant un récipient en dépression (5) à la face frontale inférieure de catalyseur,
le temps séparant le début de l'opération de remplissage et la fin de la vidange ne dépassant pas 5 secondes.

2. Procédé selon la revendication 1,
**caractérisé en ce que**
le récipient en dépression présente au début une dépression d'au moins 150 mbar et un volume qui est de 100 à 1000 fois supérieur au volume du corps catalytique.

3. Procédé selon la revendication 2,
**caractérisé en ce que**
pendant l'aspiration libre, une vitesse d'écoulement de l'air, d'au moins 5 m/s, est maintenue dans les canaux d'écoulement.

4. Procédé selon la revendication 3,
**caractérisé en ce que**
la section libre de l'écoulement allant au récipient en dépression peut être réglée entre zéro et une valeur maximale.

5. Procédé selon la revendication 4,
**caractérisé en ce que**
le temps entre la vidange et l'aspiration est suffisamment court pour que ne puisse être atteinte la limite d'écoulement dans le cas de dispersions thixotropiques ou à structure visqueuse.

6. Procédé selon la revendication 5,
**caractérisé en ce que**
le corps catalytique est humidifié avant de recevoir son revêtement.

7. Procédé selon la revendication 5,
**caractérisé en ce que**
le corps catalytique, avant de recevoir son revêtement, est pré-imprégné par des acides, des bases ou des solutions salines.

8. Procédé selon l'une quelconque des revendications 1 à 7,
**caractérisé en ce qu'**
après la vidange des canaux d'écoulement et avant la calcination du corps catalytique, on envoie dans les canaux d'écoulement un courant d'air sec, à une température comprise entre 50 et 80°C, dans le sens opposé au sens de vidange, et à une vitesse de plus de 2 à 10 m/s, pendant une durée de 2 à 60 secondes.
